# EUROPÄISCHE PATENTSCHRIFT

(11) **EP 1 586 504 B1**
(45) Veröffentlichungstag und Bekanntmachung des Hinweises auf die Patenterteilung: **26.11.2008**
(21) Anmeldenummer: 05007995.3
(22) Anmeldetag: 12.04.2005
(51) Int. Cl.: B64D 13/06, B64D 37/32

(54) **System zur Luftaufbereitung**
System for the conditioning of air
Système pour le conditionnement d'air

(30) Priorität: 13.04.2004 DE 102004017879
(43) Veröffentlichungstag der Anmeldung: 19.10.2005
(73) Patentinhaber: Liebherr-Aerospace Lindenberg GmbH, 88161 Lindenberg/Allgäu (DE)
(72) Erfinder: Haas, Joachim, 88239 Wangen (DE); Brutscher, Norbert, 88161 Lindenberg (DE)
(74) Vertreter: Herrmann, Uwe

(56) Entgegenhaltungen:
- EP-A- 1 273 514
- EP-A- 1 295 789
- US-A- 2 557 099
- US-A- 3 326 109
- US-A- 4 262 495
- US-A1- 2004 025 507

## Beschreibung

Die vorliegende Erfindung betrifft ein System und ein Verfahren zur Luftaufbereitung in einem Flugzeug, gemäß dem Oberbegriff des Anspruchs 1 sowie gemäß dem Oberbegriff des Anspruchs 13.

Zum Betrieb von Sauerstoff- und Stickstofferzeugungsgeräten in Flugzeugen sowie von Geräten in Flugzeugen mit ähnlichen Anforderungen an die Versorgungsluft wird gekühlte Druckluft benötigt.

Durch die Kerosinentnahme während des Fluges füllen sich die Flugzeugtanks mit einem Gemisch aus Kerosindampf und Luft. Bei ungünstiger Zusammensetzung kann ein explosives Gemisch entstehen, das sich selbst oder durch Funkenbildung entzündet. Um dieses Risiko auszuschließen, wird vorgeschlagen, den Sauerstoffgehalt der Luft im Kerosintank zu reduzieren. Untersuchungen haben gezeigt, dass durch eine Reduzierung des (normalen) Sauerstoffgehaltes der Luft im Kerosintank von 20,9 % auf ca. 12 % bis 14,5 % eine Selbstentzündung des Gemisches zuverlässig vermieden werden kann. Neben einem geringen Sauerstoffgehalt ist ein hoher Stickstoffgehalt vorteilhaft, um eine Selbstentzündung des Gemisches zu verhindern.

Aus der EP 1 375 349 A1 ist ein Gerät zur Erzeugung von Stickstoff bekannt, das im Folgenden als OBIGGS (On Board Inert Gas Generation System) bezeichnet wird. Dieses System nutzt eine Molekularsiebtechnologie, wodurch der größte Anteil des Sauerstoffs herausgefiltert wird. Auslassseitig entsteht ein Produktgas mit stark reduziertem Sauerstoffgehalt und einem deutlich erhöhten Stickstoffgehalt. Dieses Produktgas kann nun in die Kerosintanks eingeleitet werden, um das Risiko einer Entzündung des Kerosin-Luft-Gemisches auszuschließen. Des Weiteren kann das OBIGGS-Produktgas z. B. auch in Frachträume geleitet werden, um dort die Brandgefahr zu minimieren.

Das OBIGGS benötigt eine Versorgung mit gekühlter Druckluft von ca. 50 °C bis 90 °C. Je nach verwendeter Filtertechnologie und Anlagengröße beträgt der mindestens notwendige Versorgungsdruck ca. 1,8 bar (rel) bzw. 3,1 bar (rel). Nach dem Stand der Technik erfolgt die Versorgung des OBIGGS dadurch, dass vorgekühlte Druckluft (ca. 200 °C und ca. 2 bar Relativdruck) aus dem Druckluftzapfsystem des Flugzeuges über ein verschließbares Einlassventil (OSOV) in einen speziellen OBIGGS-Wärmetauscher (OHX) geleitet und dort entsprechend den Anforderungen gekühlt wird. Der Wärmetauscher OHX befindet sich in einem Stauluftkanal.

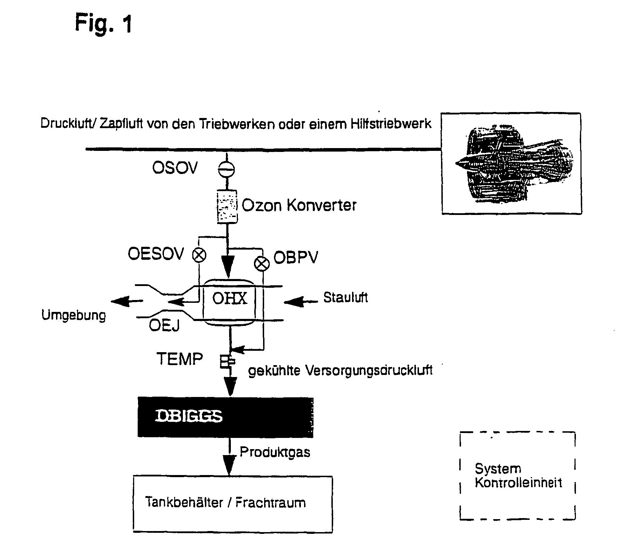

Ein derartiges vorbekanntes System ist aus Fig. 1 ersichtlich. In dem OBIGGS wird dann durch die entsprechende Filtertechnik der Sauerstoff herausgefiltert, wodurch Produktgas mit einem Stickstoffanteil von > 90 % erhalten wird. Dieses wird dann wie oben beschrieben den Tankbehältern und/oder den Frachträumen zugeleitet. Wie aus Fig. 1 ersichtlich, ist ein Ozonkonverter vorgesehen, der dem Wärmetauscher OHX druckluftseitig vorgeschaltet ist. Mit der Flughöhe nimmt der Ozongehalt der Umgebungsluft und damit der Druckluft zu. Das Ozon kann die Wirkungsweise der Sauerstoffabtrennung im OBIGGS beeinträchtigen. Diese nachteilige Wirkung kann durch den Ozonkonverter, der den Ozongehalt reduziert, vermindert oder ausgeschlossen werden.

Wie aus Fig. 1 weiter ersichtlich, ist ein Ventil OBPV vorgesehen, dass in einer Bypass-Leitung angeordnet ist, die den druckluftseitigen Einlass des Wärmetauschers OHX mit dessen druckluftseitigen Auslass verbindet. Durch Öffnen des Ventils OBPV wird heiße Druckluft um den Wärmetauscher OHX herumgeführt. Dadurch kann auch bei kalter Umgebungstemperatur (Staulufttemperatur) eine bestimmte Mindesttemperatur der gekühlten Versorgungsluft eingestellt werden. Alternativ ist eine Temperaturregelung auch durch eine Klappe oder ein Ventil (nicht dargestellt) im Stauluftkanal möglich, wodurch die Stauluftmenge reduziert wird.

Meist ist es erforderlich, dass das OBIGGS während des gesamten Fluges in Betrieb ist. Wenn das Flugzeug am Boden steht, ist jedoch kein Staudruck vorhanden, d. h. die Stauluft zur Kühlung des Wärmetauschers OHX muss anderweitig bzw. mit entsprechenden Mitteln erzeugt werden. Dies kann beispielsweise mittels eines Ejektors erreicht werden. Dabei ist vorgesehen, dass Zapfluft über das offene Ventil OESOV (siehe Fig. 1) geleitet und einer Düse/Ejektor OEJ zugeführt wird. Die hohe Austrittsgeschwindigkeit der Luft an der Düse bewirkt ein Mitreißen der Umgebungsluft, wodurch ein zur Kühlung des Wärmetauschers OHX dienender Stauluftstrom erzeugt wird. Die notwendige Ejektorluftmenge beträgt ca. 60 % der OBIGGS-Versorgungsluftmenge.

Alternativ dazu ist es möglich, dass die Stauluft am Boden mittels eines Gebläses im Stauluftkanal erzeugt wird. Hierzu ist eine Stromversorgung und eine Kontrolleinheit erforderlich, die in Fig. 1 nicht dargestellt sind.

Für ein Flugzeug mit ca. 150 Passagieren sind folgende Durchsätze für die Versorgung einer OBIGGS-Anlage notwendig:

| | |
|---|---|
| Gekühlte OBIGGS-Versorgungsdruckluft | ca. 100 g/s |
| Stauluft | ca. 150 g/s bis 200 g/s |
| Ejektor (nur im Bodenbetrieb) | ca. 60 g/s. |

Zur Bereitstellung von 100 g/s gekühlter OBIGGS-Versorgungsdruckluft sind somit insgesamt ca. 160 g/s Druckluft und zusätzlich ca. 200 g/s Stauluft notwendig.

Wie oben erwähnt, sind auch OBIGGS-Anlagen bekannt, die einen höheren Versorgungsdruck von mindestens ca. 3,1 bar (rel) benötigen. Zum Ausgleich dafür beträgt der Bedarf an gekühlter Versorgungsdruckluft jedoch nur ca. 35 % (in diesem Beispiel somit ca. 35 g/s). Aufgrund des höheren Druckes und des kleineren Durchsatzes baut diese OBIGGS-Anlage kleiner und leichter als diejenige, welche mit kleineren Drücken, jedoch höheren Durchsätzen arbeitet.

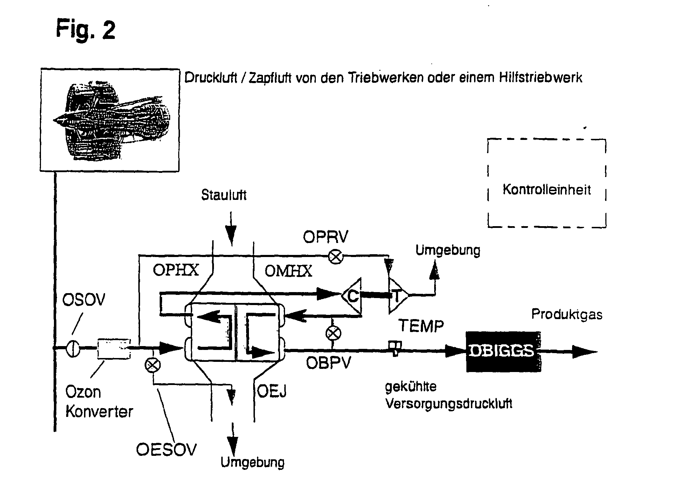

Ein Problem beim Betrieb von derartigen OBIGGS-Anlagen, die einen höheren Versorgungsdruck von ca. 3,1 bar (rel) benötigen, besteht darin, dass das Niveau der Druckluftversorgung von Flugzeugen bei ca. 2 bar (rel) und damit deutlich unterhalb der benötigten 3,1 bar (rel) liegt. Um für diesen Typ von OBIGGS-Anlage gekühlte Druckluft bereitzustellen, ist somit ein Verdichter notwendig. Fig. 2 zeigt eine entsprechend Architektur, die ebenfalls aus dem Stand der Technik bekannt ist.

Analog zu dem in Fig. 1 dargestellten System wird Druckluft/Zapfluft über das offene Ventil OSOV dem System zugeführt. Die Druckluft strömt nach Passieren des Ventils OSOV durch einen Ozonkonverter. Damit bei der nachfolgenden Verdichtung in dem Verdichter C keine zu hohen Temperaturen auftreten, ist dem Verdichter ein Wärmetauscher (OPHX) vorgeschaltet. Nach dem Passieren des Kompressors wird die Druckluft in dem Wärmetauscher OMHX auf ca. 75 °C gekühlt und der OBIGGS-Anlage zugeführt. Die Wärmetauscher OPHX und OMHX sind durch Stauluft gekühlt, wie dies in Fig. 2 dargestellt ist. Am Boden wird die Stauluft mittels Ejektor OEJ oder Gebläse erzeugt. Der Antrieb des Kompressors erfolgt mittels einer Turbine, in der Druckluft entspannt wird, die stromabwärts des Ozonkonverters abgezweigt wird. Zu diesem Zweck wird das Ventil OPRV geöffnet und dem Turbineneinlass Druckluft zugeführt.

Alternativ dazu kann der Antrieb des Kompressors auch mittels eines Elektromotors erfolgen, wie dies beispielsweise aus der U.S.-Patentschrift 4,681,602 bekannt ist. Dadurch wird die Druckluft für die Turbine eingespart. Der Elektromotor baut jedoch relativ schwer und erfordert weitere Komponenten wie eine Energieversorgung (Umrichter) und eine Kontrolleinheit.

Die aus dem Stand der Technik bekannten Systeme gemäß Fig. 1 und Fig. 2 sind mit folgenden Nachteilen verbunden:
- Stauluftkanal
   Für die Stauluft des Wärmetauschers OHX (Fig. 1) bzw. OPHX/OMHX (Fig. 2) ist ein eigenständiger Stauluftkanal notwendig, einschließlich der entsprechenden Öffnungen für Einlass und Auslass in der Flugzeugstruktur. Dadurch wird der verfügbare Raum für Fracht reduziert und das Flugzeuggewicht erhöht, sowie zusätzliche Kosten erzeugt. Dieser Nachteil wird noch vergrößert, falls OBIGGS-Anlagen in bestehende Flugzeuge nachgerüstet werden müssen. Hierbei sind größere Modifikationen notwendig, um einen Stauluftkanal mit neuen zusätzlichen Öffnungen für den Ein- und Auslass nachträglich in die Flugzeugstruktur zu integrieren.
- Stauluftdurchsatz
   Aus Kosten- und Komplexitätsgründen wird im Allgemeinen auf eine Klappe am Einlass des Stauluftkanals verzichtet. Daraus ergibt sich der Nachteil, dass im Flug immer der maximale Stauluftkanaldurchsatz vorhanden ist, auch wenn in bestimmten Flugphasen oder bei niedriger Umgebungstemperatur ein geringer Stauluftdurchsatz ausreichend wäre. Der Stauluftdurchsatz erhöht den Flugzeugkerosinverbrauch und damit die Betriebskosten.
- Ejektor/Gebläse
   Der OBIGGS-Betrieb ist im Allgemeinen auch am Boden erforderlich. Da in diesem Betriebszustand aufgrund des fehlenden Staudrucks keine Stauluft zur Verfügung steht, muss diese aktiv gefördert werden. Hierzu muss entweder ein Gebläse oder wie in den Figuren 1 und 2 gezeigt ein Ejektor (OEJ und OESOV) eingebaut werden. Beide Varianten sind mit Kosten und Gewichtsnachteilen verbunden. Des Weiteren ergibt sich dadurch ein zusätzlicher Druckluftbedarf für den Ejektor bzw. ein zusätzlicher elektrischer Leistungsbedarf, falls alternativ ein Stauluftgebläse eingesetzt wird.
- Ozonkonverter
   Vorbekannte Druckluftaufbereitungssysteme benötigen meistens einen Ozonkonverter. Die hierbei erzeugten Druckverluste müssen mit kleineren Druckverlusten in den nachfolgenden Wärmetauschern kompensiert werden, um den gleichen Versorgungsdruck für die OBIGGS-Anlage sicherzustellen. Dadurch bauen die Wärmetauscher größer und schwerer. Hinzu kommt als weiterer Nachteil das Gewicht des Ozonkonverters.
- Verfügbarkeit von Druck während des Abstiegs
   Je nach geforderter Triebwerksleistung stehen unterschiedliche Drücke im Zapfluftsystem des Flugzeuges zur Verfügung. Während des Abstieges/Landeanfluges ist die Triebwerksleistung stark reduziert, woraus relativ niedrige Drücke resultieren.
   Die Tanks eines Flugzeuges sind derart belüftet, dass sich im Tank der gleiche Druck wie in der Umgebung ergibt. Während des Flugzeugabstieges nimmt der Umgebungsdruck zu. Um den Tankinnendruck an den Umgebungsdruck anzupassen, muss in dieser Phase am meisten Luft den Tanks zugeführt werden. Eine OBIGGS-Anlage muss also in dieser Phase die maximale Menge an stickstoffangereichter Luft liefern und erzeugt damit auch in dieser Phase die maximalen Anforderungen an die OBIGGS-Versorgungsdruckluft. Da die Leistungsfähigkeit der in Fig. 1 und Fig. 2 beschriebenen Systeme direkt vom Druck der Zapfluft abhängt, ist gerade in der Phase der maximalen Anforderung die Leistungsfähigkeit der OBIGGS-Druckluftaufbereitungsanlage eingeschränkt. Dies muss durch entsprechend größer dimensionierte Komponenten kompensiert werden, woraus sich entsprechende Nachteile bezüglich Gewicht, Bauraum und Kosten ergeben.

Die oben beschriebenen Nachteile gelten gleichermaßen für die in Fig. 1 und Fig. 2 dargestellten Systeme aus dem Stand der Technik.

Aus dem in Fig. 2 dargestellten System ergeben sich folgende zusätzliche Nachteile:

Mit dem in Fig. 2 beschriebenen System ergibt sich gegenüber dem System zunächst der Vorteil, dass höhere Drücke für die OBIGGS-Versorgung erzielbar sind. Dadurch wird die geforderte Menge an gekühlter Versorgungsluft deutlich reduziert und es kann eine effizientere OBIGGS-Anlage verwendet werden. Dieser Vorteil wird jedoch aus folgenden Gründen wieder zunichte gemacht:
- Mit dem Verdichter ist eine zusätzliche Komponente notwendig,
- es ist ein Antrieb für den Verdichter notwendig, der im Falle einer Turbine zusätzliche Druckluft von Zapfluftsystem benötigt. Es ist somit Druckluft für die eigentliche OBIGGS-Versorgung notwendig, sowie für den Antrieb der Turbine und für den Ejektor zur Erzeugung von Stauluft, d. h. Kühlluft im Bodenbetrieb,
- es ist ein zusätzlicher Wärmetauscher (OPHX) notwendig, mit den entsprechenden Nachteilen bezüglich Bauraum und Gewicht,
- aufgrund der kleineren notwendigen OBIGGS-Versorgungsluftmenge (bei höherem Versorgungsdruck) könnten prinzipiell der notwendige Stauluftdurchsatz reduziert werden. Dies wird jedoch durch die Stauluftmenge, die der zusätzliche OPHX benötigt, zunichte gemacht.

Aus der US 2004/00255 07 A1 ist ein System zur Luftaufbereitung in einem Flugzeug gemäß dem Oberbegriff des Anspruchs 1 sowie ein Verfahren zur Luftaufbereitung in einem Flugzeug gemäß dem Oberbegriff des Anspruchs 13 bekannt.

Der vorliegenden Erfindung liegt die Aufgabe zugrunde, ein kompaktes und effizientes System zur Luftaufbereitung in einem Flugzeug bereitzustellen.

Diese Aufgabe wird durch die Merkmale gemäß Patentanspruch 1 gelöst.

Vorteilhafte Ausgestaltungen der Erfindung sind Gegenstand der Unteransprüche.

Erfindungsgemäß ist ein System zur Luftaufbereitung in einem Flugzeug mit einem einlassseitig mit Luft beaufschlagten Verdichter vorgesehen, mit einem dem Verdichter nachgeschalteten Versorgungsluft-Wärmetauscher, der druckluftseitig einlassseitig mit in dem Verdichter komprimierter Luft beaufschlagt wird und der druckluftseitig auslassseitig mit einem System oder Gerät in Verbindung steht, das mit Druckluft zu versorgen ist, sowie mit einer Turbine, die einlassseitig mit Druckluft aus einer von der Luftversorgung des Verdichters getrennten Druckluftversorgung beaufschlagt wird und auslassseitig mit dem niederdruckseitigen Einlass des Versorgungsluft-Wärmetauschers in Verbindung steht und die mit dem Verdichter derart in Verbindung steht, dass der Verdichter mittels der Turbine antreibbar ist.

Ein derartiges System zur Luftaufbereitung weist den Vorteil auf, dass zur Kühlung der Versorgungsluft keine Stauluft benötigt wird, wodurch ein nach dem Stand der Technik eigens vorgesehener Stauluftkanal mit entsprechenden Öffnungen in der Flugzeugstruktur entfallen kann. Dies ist insbesondere von Vorteil, falls eine OBIGGS-Anlage in bestehende Flugzeugtypen nachgerüstet wird. Es wird das Gewicht und der Bauraum des Stauluftkanals eingespart und zusätzlich wird die Erhöhung des Flugzeugwiderstandes aufgrund des Stauluftdurchsatzes vermieden. Durch die Unabhängigkeit von einem Stauluftkanal kann auch der Einbauort für das System flexibler gewählt werden.

Ein weiterer Vorteil des erfindungsgemäßen Systems besteht darin, dass kein Ejektor oder Stauluftgebläse zur Erzeugung von Stauluft im Bodenbetrieb notwendig ist. Dadurch werden Bauteile (Ejektorventil, Ejektor und Leitungen oder Gebläse und Stromversorgung mit Ansteuerung) eingespart und der Bedarf an Druckluft oder elektrischer Leistung wird reduziert. Die Druckluft- und elektrische Leistungseinsparung ist insbesondere von Vorteil, da am Boden, wenn die Triebwerke noch abgeschaltet sind, die Zapfluft und elektrische Leistung von einem Hilfstriebwerk erzeugt werden, das nur ca. 90 % der normalen Zapfluftmenge der Triebwerke erzeugen kann. Zapfluft und elektrische Leistung sind insbesondere im Bodenbetrieb nur begrenzt verfügbar.

Im Gegensatz zu dem in Fig. 1 dargestellten System aus dem Stand der Technik kann das erfindungsgemäße System auch hohe Versorgungsdrücke von ca. 3,1 bar (rel) erzielen. Wie oben beschrieben, sind bei höheren Drücken deutlich geringere OBIGGS-Versorgungsluftmengen (Massenstrom) ausreichend (ca. 35 %). Aufgrund des geringen Durchsatzes und gleichzeitig höheren Druckes beträgt der an das OBIGGS zu fördernde Volumenstrom im Vergleich zu dem in Fig. 1 dargestellten System aus dem Stand der Technik nur 20 %. Die Baugröße von Komponenten wie Wärmetauscher und Kompressor ist im wesentlichen eine Funktion des Volumenstromes. Diese Komponenten bauen deshalb wesentlich kleiner und leichter. Das erfindungsgemäße System kann sehr kompakt mit minimalen Außenabmessungen gebaut werden.

In weiterer Ausgestaltung der Erfindung ist vorgesehen, dass der Verdichter einlassseitig mit Luft aus einem bedruckten Raum, vorzugsweise mit Kabinenluft beaufschlagt wird. Auch Luft aus anderen bedruckten Räumen eines Flugzeuges ist in dieser Ausgestaltung der Erfindung einsetzbar. Üblicherweise wird vom Zapfluftsystem über die Klimaanlage des Flugzeuges der Kabine Frischluft zugeführt. Dabei sind in der Regel der Klimaanlage Ozonkonverter vorgeschaltet. Die Kabinenluft ist also bereits ozongefiltert. Das erfindungsgemäße System saugt in dieser Ausführungsform OBIGGS-Versorgungsluft mittels des Verdichters aus der Kabine an. Somit kann der Ozonkonverter entfallen. Neben der Gewichts- und Kostenreduzierung werden dadurch auch die Druckverluste und damit die benötigte Verdichterleistung/Druckerhöhung reduziert. Hieraus ergeben sich sekundäre Vorteile, wie geringerer Druckbedarf am Turbineneintritt sowie kleinere Wärmetauscher aufgrund der geringeren Verdichterauslasstemperatur.

Wie oben ausgeführt, ist während des Flugzeugabstieges aus der Reiseflughöhe bzw. im Landeanflug die Triebwerksleistung und damit der Versorgungsdruck im Zapfluftsystem deutlich reduziert. Gleichzeitig erfordert jedoch diese Flugphase die maximalen Durchsätze von der OBIGGS-Anlage und damit auch von der OBIGGS-Druckluftversorgung. Aufgrund der Tatsache, dass das erfindungsgemäße System in dieser bervorzugten Ausgestaltung der Erfindung aus der Kabine Luft ansaugt, deren Druck über dem Umgebungsdruck liegt, kann das erfindungsgemäße System im Flug auch bei reduziertem Zapfluftdruck ausreichend verdichtete und gekühlte Versorgungsluft liefern.

In einer weiteren Ausgestaltung der vorliegenden Erfindung ist vorgesehen, dass die Turbine einlassseitig mit Zapfluft von den Triebwerken oder von einem Hilfsaggregat des Flugzeuges beaufschlagt wird.

Zur Kühlung der der Turbine zugeführten Druckluft ist der Turbine gemäß der vorliegenden Erfindung druckluftseitig ein Druckluft-Wärmetauscher vorgeschaltet. Dieser ist dem Versorgungsluft-Wärmetauscher niederdruckseitig nachgeschaltet, so dass die Turbinenauslassluft zunächst den Versorgungsluft-Wärmetauscher und sodann den Druckluft-Wärmetauscher durchströmt. Die Vorkühlung der der Turbine zugeführten Druckluft reduziert die Turbinen-Auslasstemperatur und damit die druckluftseitige Auslasstemperatur des Versorgungsluft-Wärmetauschers.

In weiterer Ausgestaltung der Erfindung ist vorgesehen, dass der Druckluft-Wärmetauscher mit dem Versorgungs-Wärmetauscher eine bauliche Einheit bildet und von diesem druckluftseitig getrennt ist. Alternativ dazu ist vorgesehen, dass die Wärmetauscher mechanisch und druckluftseitig getrennt sind.

Gemäß der vorliegenden Erfindung ist eine mittels eines Ventils verschließbare Bypass-Leitung vorgesehen, die den druckluftseitigen Einlass des Druckluft-Wärmetauschers mit dessen druckluftseitigen Auslass verbindet. Auf diese Weise lässt sich bei geringer Temperatur der Druckluft vom Zapfluftsystem eine bestimmte Mindesttemperatur der gekühlten Versorgungsdruckluft einstellen.

Alternativ oder zusätzlich ist eine mittels eines Ventils verschließbare Bypass-Leitung vorgesehen, die den druckluftseitigen Einlass des Versorgungsluft-Wärmetauschers mit dessen druckluftseitigen Auslass verbindet. Auch eine derartige Ausführungsform dient zur Temperaturregelung der Versorgungsluft, die dem dem Versorgungsluft-Wärmetauscher druckluftseitig nachgeschalteten System bzw. Gerät zuzuführen ist.

Weiterhin kann vorgesehen sein, dass der Verdichter ein- oder mehrstufig ausgeführt und/oder dass ein oder mehrere Verdichter vorgesehen sind.

Die niederdruckseitige Auslassluft des oder der Wärmetauscher kann mittels einer Leitung an die Umgebung abgegeben werden oder in den Stauluftkanal einer Flugzeugklimaanlage eingeleitet werden.

In weiterer Ausgestaltung der Erfindung ist ein Ventil vorgesehen, mittels dessen der der Turbine zugeführte Druckluftstrom veränderbar oder absperrbar ist. In bestimmten Flugphasen, wie dem Start können relativ hohe Drücke im Zapfluftsystem auftreten. Dies führt zu einer hohen Turbinen- und damit auch hohen Verdichterleistung. Um hierbei extreme Temperaturen am Verdichterauslass zu verhindern, kann der Druck der der Turbine zugeführten Druckluft durch teilweises Schließen dieses Ventils limitiert werden.

In weiterer Ausgestaltung der Erfindung ist ein Ventil vorgesehen, mittels dessen der dem Verdichter zugeführte Luftstrom veränderbar oder absperrbar ist.

In bevorzugter Ausgestaltung der Erfindung bilden Verdichter und Turbine eine Welleneinrichtung mit gemeinsamer Welle. Diese Zweiradmaschine kann mit einem Motor ausgestattet sein, der durch die Welle mit dem Verdichter und der Turbine verbunden ist. Im Falle von besonders geringen Zapfluftdrücken kann damit die zu geringe Wellenleistung der Turbine kompensiert werden.

Weiterhin kann vorgesehen sein, dass die Welleneinrichtung und der oder die Wärmetauscher eine gemeinsame mechanische Einheit bilden oder alternativ dazu mechanisch voneinander getrennt sind.

Die Erfindung betrifft ferner ein Verfahren zur Luftaufbereitung in einem Flugzeug gemäß Patenanspruch 13.

Vorteilhafte Ausgestaltungen des Verfahrens sind Gegenstand der Unteransprüche.

Weitere Einzelheiten und Vorteile werden anhand eines in der Zeichnung dargestellten Ausführungsbeispiel näher erläutert. Es zeigen:
- Fig. 1:: ein Druckluftaufbereitungssystem gemäß dem Stand der Technik,
- Fig. 2:: ein Druckluftaufbereitungssystem gemäß dem Stand der Technik in einer weiteren Ausführungsform,
- Fig. 3:: ein Druckluftaufbereitungssystem gemäß der Erfindung ohne Stauluftkanal mit OBPV-Temperaturregelung,
- Fig. 4:: ein Druckluftaufbereitungssystem gemäß der Erfindung ohne Stauluftkanal mit TBPV-Temperaturregelung,
- Fig. 5:: Drücke als Funktion der Flughöhe,
- Fig. 6:: ein Druckluftaufbereitungssystem gemäß der Erfindung ohne Stauluftkanal mit motorisierter Zweiradkühlturbine.

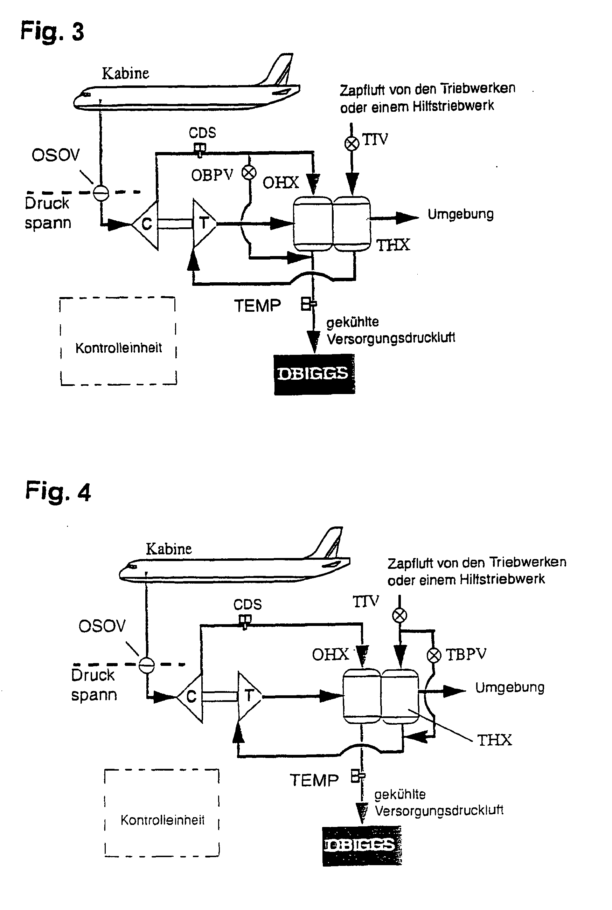

Das Druckluftaufbereitungssystem gemäß Fig. 3 weist die folgenden Komponenten auf:

Vorgesehen ist eine Zweiradkühlturbine mit einem Verdichter C und einer Turbine T. Weiterhin ist eine Leitung vorgesehen, die von der bedruckten Kabine zum Verdichtereinlass führt und die durch das Ventil OSOV verschließbar ist. Der Versorgungsluft-Wärmetauscher OHX ist druckluftseitig einlassseitig mit dem Verdichter und druckluftseitig auslassseitig mit der zu versorgenden OBIGGS-Anlage verbunden. Des Weiteren ist eine Leitung vorgesehen, die von dem Zapfluftsystem zum druckluftseitigen Einlass des Wärmetauschers THX führt, wobei diese Leitung durch das Ventil TIV verschließbar ist. Eine weitere Leitung verbindet den druckluftseitigen Auslass des Wärmetauschers THX mit dem Einlass der Turbine. Des Weiteren ist eine Leitung vorgesehen, die den druckluftseitigen Einlass des Wärmetauschers OHX mit dem druckluftseitigen Auslass des Wärmetauschers OHX verbindet und die mittels des Ventils OBPV verschließbar ist. Schließlich ist eine Leitung vorgesehen, die den Auslass der Turbine T mit dem niederdruckseitigen Einlass des Versorgungsluft-Wärmetauschers OHX verbindet. Der Druckluft-Wärmetauscher THX ist dem Versorgungsluft-Wärmetauscher OHX niederdruckseitig nachgeschaltet und kann mit dem Versorgungsluft-Wärmetauscher OHX eine gemeinsame, jedoch druckluftseitig getrennte Wärmetauschereinheit bilden. Eine Leitung von dem niederdruckseitigen Auslass des Druckluft-Wärmetauschers THX führt in die Umgebung oder in den Stauluftauslasskanal einer Klimaanlage des Flugzeuges.

Das die Turbine T umfassende Leitungssystem ist von dem den Verdichter C umfassenden Leitungssystem getrennt. Die in beiden Systemen vorhandene Komponente ist der Versorgungsluft-Wärmetauscher OHX, der druckseitig von in dem Verdichter komprimierter Luft und niederdruckseitig von Turbinenauslassluft durchströmt wird.

Die Funktionsweise des in Fig. 3 dargestellten Systems gestaltet sich wie folgt:

Kabinenluft von ca. 25 °C und 1 bar wird von dem Verdichter C angesaugt und auf ca. 3,1 bar (rel) verdichtet (Bodenbetrieb). An der Verdichterauslassseite liegt somit ein Druck von ca. 4,1 bar (absolut) vor. Danach wird die Luft in dem Versorgungsluft-Wärmetauscher OHX auf ca. 75 °C abgekühlt und nachfolgend der OBIGGS-Anlage oder einer anderen Anlage mit ähnlichen Versorgungsluftanforderungen zugeführt. Die Entnahme der Kabinenluft kann beispielsweise im Einlassbereich der Auslassklappen- und ventile der Kabinendruckregelung erfolgen. Die benötigte Luftmenge beträgt ca. 3 % der der Kabine ständig zugeführten Frischluftmenge. Daraus ergibt sich, dass der Einfluss auf die Kabinendruckregelung und Kabinenleckage vernachlässigbar gering ist.

Druckluft/Zapfluft von ca. 200 °C und 2 bar (rel) wird dem Druckluft-Wärmetauscher THX zugeführt und auf etwa 150 °C abgekühlt. Danach wird diese Luft in der Turbine T entspannt und dabei auf ca. 50 °C abgekühlt. Dieses Temperaturniveau ist ausreichend, um in dem nachfolgenden Versorgungsluft-Wärmetauscher OHX die Verdichterauslassluft von ca. 210 °C (CDS) auf ca. 75 °C (TEMP) abzukühlen. Am niederdruckseitigen Auslass des Versorgungsluft-Wärmetauschers OHX ergibt sich eine Temperatur von ca. 120 °C, die ausreicht, um in dem nachfolgenden Druckluft-Wärmetauscher THX die Druckluft vom Zapfluftsystem von ca. 200 °C auf etwa 150 °C abzukühlen. Die niederdruckseitige Auslassluft des Druckluft-Wärmetauschers THX wird schließlich z. B. über den ohnehin vorhandenen Stauluftauslasskanal der Klimaanlage des Flugzeuges an die Umgebung geleitet. Die anfallende Wellenleistung der Turbine T wird zum Antrieb des Verdichters C genutzt.

Der Durchsatz der Turbine beträgt in etwa das zweifache der geforderten OBIGGS-Versorgungsluftmenge.

Wie aus Fig. 3 ersichtlich, ist eine Bypass-Leitung vorgesehen, die den druckluftseitigen Einlass mit dem druckluftseitigen Auslass des Versorgungsluft-Wärmetauschers OHX verbindet. In dieser Leitung ist ein Ventil OBPV vorgesehen. Durch das Öffnen dieses Ventils wird heiße, in dem Verdichter C komprimierte Luft um den Wärmetauscher OHX herumgeführt. Dadurch ist auch bei niedriger Turbinenauslasstemperatur (aufgrund kleiner Temperatur der Druckluft vom Zapfluftsystem) eine bestimmte Mindesttemperatur TEMP der gekühlten OBIGGS-Versorgungsdruckluft einstellbar.

Aus Fig. 4 ergibt sich eine alternative Methode zur Temperaturregelung der OBIGGS-Versorgungsluft. Unter OBIGGS-Versorgungsluft ist die druckluftseitige Auslassluft des Versorgungsluft-Wärmetauschers OHX zu verstehen. Bei dieser alternativen Methode zur Temperaturregelung wird der druckluftseitige Einlass des Druckluft-Wärmetauschers THX mit dem druckluftseitigen Auslass dieses Wärmetauschers verbunden, wie dies aus Fig. 4 ersichtlich ist. Diese Bypass-Leitung ist durch das Ventil TBPV verschließbar. Durch das Öffnen dieses Ventils wird heiße Druckluft um den Druckluft-Wärmetauscher THX herumgeführt. Damit ergibt sich eine höhere Turbineneinlasstemperatur bzw. höhere Turbinenauslasstemperatur und letztlich eine höhere Temperatur TEMP der OBIGGS-Versorgungsluft.

Die zu Fig. 4 erläuterte Methode mittels des Ventils TBPV hat gegenüber der Temperaturregelmethode gemäß Fig. 3 mit dem Ventil OBPV den Vorteil, dass bei reduzierter Zapflufttemperatur, d. h. bei reduzierter druckluftseitiger Einlasstemperatur des Wärmetauschers THX, die der Turbine T zugeführte Zapfluft im Druckluft-Wärmetauscher THX weniger stark vorgekühlt wird. Dadurch ist die vorhandene Druckleistung am Turbineneintritt höher, wodurch sich ein geringerer Druckbedarf für die Turbine T ergibt. Je höher die Temperatur am Turbineneintritt, desto geringer ist der geforderte Druck am Turbineneintritt zur Erzielung der gleichen Wellenleistung. Dies ist insbesondere von Vorteil während der Abstiegsphase des Flugzeuges, da hier geringer Zapflufttemperaturen und -drücke auftreten können, was auf die reduzierte Triebwerksleistung zurückzuführen ist.

In bestimmten Flugphasen, wie beim Start können relativ hohe Drücke im Zapfluftsystem auftreten. Dies führt zur hoher Turbinen- und damit Verdichterleistung. Um hierbei extreme Temperaturen (CDS) am Verdichterauslass zu verhindern, kann der Druck der der Turbine T zugeführten Druckluft durch teilweises Schließen des Ventils TIV limitiert werden.

Zur Überwachung der Regelung ist das erfindungsgemäße System mit einer Kontrolleinheit verbunden.

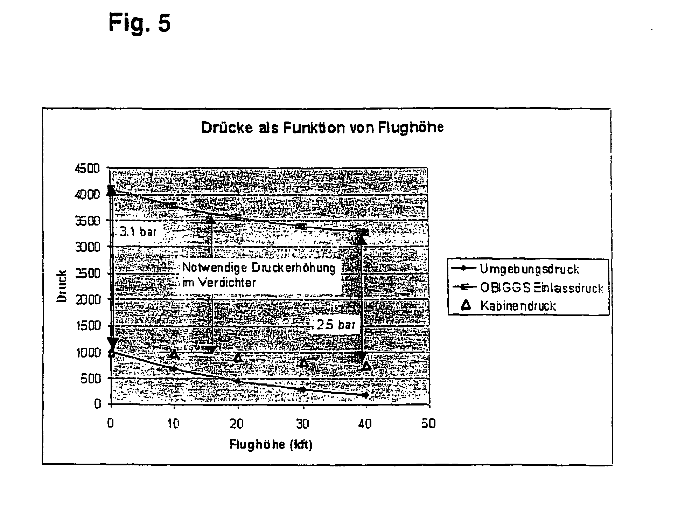

Mit zunehmender Flughöhe nimmt der Umgebungsdruck deutlich ab, wie dies aus Fig. 5 ersichtlich ist. Der Kabinendruck wird jedoch deutlich geringer abgesenkt. Bei einem Umgebungsdruck von ca. 200 hPa in 38.000 ft Flughöhe beträgt der Kabinendruck immer noch 800 hPa. Die Druckanforderungen für die OBIGGS-Versorgungsluft sind relativ zum Umgebungsdruck. Da der Verdichter C in einem vorteilhaften Ausführungsbeispiel der Erfindung aus der Kabine Luft ansaugt, nimmt die geforderte Verdichterleistung dementsprechend mit zunehmender Flughöhe ab, da die Druckdifferenz zwischen OBIGGS-Versorgungsluft und Kabinenluft abnimmt. Parallel dazu nimmt auch die Druckluftanforderung der Turbine zum Antrieb des Verdichters ab.

Während am Boden der Verdichter eine Druckerhöhung um ca. 3,1 bar erbringt, ist in einer Flughöhe von 40.000 ft nur eine Druckerhöhung um 2,5 bar erforderlich, wie dies exemplarisch aus Fig. 5 hervorgeht. Mit der kleineren notwendigen Verdichterleistung reduziert sich auch die Verdichterauslasstemperatur und damit die druckluftseitige Auslasstemperatur des Versorgungsluft-Wärmetauschers OHX von ca. 75 °C auf ca., 50 °C. Somit ergibt sich, dass im Flug eine gewisse Leistungsreserve bezüglich der Versorgungstemperatur vorhanden ist.

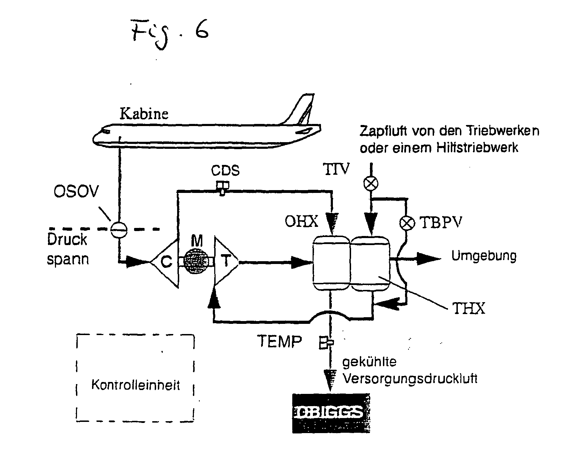

In einer weiteren Ausgestaltung der Erfindung kann die Zweiradmaschine mit Verdichter C und Turbine T zusätzlich einen Motor M aufweisen, der durch eine Welle mit dem Verdichter C und der Turbine T verbunden ist, wie sich dies aus Fig. 6 ergibt. Im Falle von besonders geringen Zapfluftdrücken kann damit die zu geringe Wellenleistung der Turbine kompensiert werden, d. h. die Turbinenleistung durch die entsprechende Motorleistung ergänzt werden.

Zusammenfassend ergibt sich, dass der Luftbedarf durch das erfindungsgemäße System um 60 % bis 65 % reduziert werden kann.

## Patentansprüche

1. System zur Luftaufbereitung in einem Flugzeug mit einem einlassseitig mit Luft beaufschlagten Verdichter (C), mit einem dem Verdichter (C) nachgeschalteten Versorgungsluft-Wärmetauscher (OHX), der druckluftseitig einlassseitig mit in dem Verdichter (C) komprimierter Luft beaufschlagt wird und der druckluftseitig auslassseitig mit einem On Board Inert Gas Generation System (OBIGGS) in Verbindung steht, das mit Druckluft zu versorgen ist, sowie mit einer Turbine (T), die einlassseitig mit Druckluft aus einer von der Luftversorgung des Verdichters (C) getrennten Druckluftversorgung beaufschlagt wird und auslassseitig mit dem niederdruckseitigen Einlass des Versorgungsluft-Wärmetauschers (OHX) in Verbindung steht und die mit dem Verdichter (C) derart in Verbindung steht, dass der Verdichter (C) mittels der Turbine (T) antreibbar ist,
**dadurch gekennzeichnet,**
**dass** der Turbine (T) ein Druckluft-Wärmetauscher (THX) vorgeschaltet ist, wobei der Druckluft-Wärmetauscher (THX) dem Versorgungsluft-Wärmetauscher (OHX) niederdruckseitig nachgeschaltet ist, so dass die Turbinenauslassluft zunächst den Versorgungsluft-Wärmetauscher (OHX) und sodann den Druckluft-Wärmetauscher (THX) durchströmt und
**dass** eine mittels eines Ventils (TBPV) verschließbare Bypassleitung vorgesehen ist, die den druckluftseitigen Einlass des Druckluft-Wärmetauschers (THX) mit dessen druckluftseitigen Auslass verbindet und/oder dass eine mittels eines Ventils (OBPV) verschließbare Bypassleitung vorgesehen ist, die den druckluftseitigen Einlass des Versorgungsluft-Wärmetauschers (OHX) mit dessen druckluftseitigen Auslass verbindet.

2. System nach Anspruch 1, **dadurch gekennzeichnet, dass** der Verdichter (C) einlassseitig mit Luft aus einem bedruckten Raum eines Flugzeuges, vorzugsweise mit Kabinenabluft beaufschlagt wird.

3. System nach Anspruch 1 oder 2, **dadurch gekennzeichnet, dass** die der Turbine (T) zugeführte Druckluft Zapfluft von den Triebwerken oder von einem Hilfsaggregat des Flugzeuges ist.

4. System nach einem der vorhergehenden Ansprüche, **dadurch gekennzeichnet, dass** der Druckluft-Wärmetauscher (THX) mit dem Versorgungsluft-Wärmetauscher (OHX) eine mechanische Einheit bildet und von diesem druckluftseitig getrennt ist.

5. System nach einem der Ansprüche 1 bis 3, **dadurch gekennzeichnet, dass** der Versorgungsluft-Wärmetauscher (OHX) und der Druckluft-Wärmetauscher (THX) mechanisch und druckluftseitig getrennt sind.

6. System nach einem der vorhergehenden Ansprüche, **dadurch gekennzeichnet, dass** der Verdichter ein- oder mehrstufig ausgeführt ist und/oder dass ein oder mehrere Verdichter vorgesehen sind.

7. System nach einem der vorhergehenden Ansprüche, **dadurch gekennzeichnet, dass** eine Leitung vorgesehen ist, mittels derer die niederdruckseitige Auslassluft des oder der Wärmetauscher (OHX, THX) an die Umgebung abgebbar ist oder in einen Stauluftkanal einer Flugzeugklimaanlage einleitbar ist.

8. System nach einem der vorhergehenden Ansprüche, **dadurch gekennzeichnet, dass** ein Ventil (TIV) vorgesehen ist, mittels dessen der der Turbine (T) zugeführte Druckluftstrom veränderbar oder absperrbar ist.

9. System nach einem der vorhergehenden Ansprüche, **dadurch gekennzeichnet, dass** ein Ventil (OSOV) vorgesehen ist, mittels dessen der dem Verdichter (C) zugeführte Luftstrom veränderbar oder absperrbar ist.

10. System nach einem der vorhergehenden Ansprüche, **dadurch gekennzeichnet, dass** der Verdichter (C) und die Turbine (T) eine Welleneinrichtung mit gemeinsamer Welle bilden.

11. System nach Anspruch 10, **dadurch gekennzeichnet, dass** die Welleneinrichtung einen Antriebsmotor (M) zum Antrieb des Verdichters (C) aufweist.

12. System nach Anspruch 10 oder 11, **dadurch gekennzeichnet, dass** die Welleneinrichtung und der oder die Wärmetauscher (OHX; THX) eine gemeinsame mechanische Einheit bilden oder mechanisch getrennt sind.

13. Verfahren zur Luftaufbereitung in einem Flugzeug, bei dem Luft in einem Verdichter (C) komprimiert wird, die komprimierte Luft auf der Druckluftseite eines Versorgungsluft-Wärmetauschers (OHX) gekühlt wird und sodann einem On Board Inert Gas Generation System (OBIGGS) zugeführt wird, das mit Druckluft zu versorgen ist, wobei die Kühlung der in dem Verdichter (C) komprimierten Luft mittels Luft erfolgt, die mittels einer von der Luftversorgung des Verdichters (C) getrennten Druckluftversorgung einer Turbine (T) zugeführt, in dieser entspannt und der Niederdruckseite des Versorgungsluft-Wärmetauschers (OHX) zugeführt wird, wobei die bei der Entspannung der Druckluft anfallende Turbinenleistung wenigstens teilweise zum Antrieb des Verdichters (C) genutzt wird,
**dadurch gekennzeichnet,**
**dass** die der Turbine (T) zugeführte Druckluft vor dem Eintritt in die Turbine (T) in einem Druckluft-Wärmetauscher (THX) gekühlt wird, wobei die Turbinenauslassluft zur Kühlung der in dem Verdichter (C) komprimierten Luft zunächst den Versorgungsluft-Wärmetauscher (OHX) und anschließend zur Kühlung der der Turbine (T) zugeführten Druckluft den Druckluft-Wärmetauscher (THX) durchströmt und
**dass** ein Betriebsmodus zur Gewährleistung einer Mindesttemperatur der dem System (OBIGGS) oder Gerät zugeführten Druckluft vorgesehen ist, bei dem in dem Verdichter (C) komprimierte Luft unter zumindest teilweiser Umgehung des Versorgungsluft-Wärmetauschers (OHX) von der druckluftseitigen Einlassseite zur druckluftseitigen Auslassseite des Versorgungsluft-Wärmetauschers (OHX) geführt wird und/oder dass ein Betriebsmodus zur Steigerung der Turbineneinlasstemperatur vorgesehen ist, bei dem die Druckluft unter zumindest teilweiser Umgehung des Druckluft-Wärmetauschers (THX) von der druckluftseitigen Einlassseite zur druckluftseitigen Auslassseite des Druckluft-Wärmetauschers (THX) geführt wird.

14. Verfahren nach Anspruch 13, **dadurch gekennzeichnet, dass** in dem Verdichter (C) Kabinenabluft komprimiert wird.

15. Verfahren nach Anspruch 13 oder 14, **dadurch gekennzeichnet, dass** der Turbine (T) gekühlte oder nicht gekühlte Druckluft aus einem Triebwerk oder Hilfsaggregat zugeführt wird.

16. Verfahren nach einem der vorhergehenden Ansprüche, **dadurch gekennzeichnet, dass** die niederdruckseitige Auslassluft des oder der Wärmetauscher an die Umgebung abgegeben wird oder in den Stauluftkanal einer Flugzeugklimaanlage eingeleitet wird.

17. Verfahren nach einem der vorhergehenden Ansprüche, **dadurch gekennzeichnet, dass** der Verdichter (C) bei geringem Druck der der Turbine (T) zugeführten Druckluft zusätzlich motorisch angetrieben wird.

18. Verfahren nach einem der vorhergehenden Ansprüche, **dadurch gekennzeichnet, dass** ein Betriebsmodus zur Limitierung des Turbineneinlassdruckes vorgesehen ist, bei dem der der Turbine (T) zugeführte Druckluftstrom gedrosselt wird.

## Claims

1. Air treatment system in an aircraft, with a compressor (C) acted upon with air on the inlet side, with a supply-air heat exchanger (OHX) which follows the compressor (C) and which on the compressed-air side is acted upon on the inlet side with air compressed in the compressor (C) and on the compressed-air side is connected on the outlet side to an On Board Inert Gas Generation System (OBIGGS) which is to be supplied with compressed air, and with a turbine (T) which is acted upon on the inlet side with compressed air from a compressed-air supply separate from the air supply of the compressor (C) and is connected on the outlet side to the low-pressure-side inlet of the supply-air heat exchanger (OHX) and which is connected to the compressor (C) in such a way that the compressor (C) can be driven by means of the turbine (T), **characterized in that** the turbine (T) is preceded by a compressed-air heat exchanger (THX), the compressed-air heat exchanger (THX) following the supply-air heat exchanger (OHX) on the low-pressure side, so that the turbine outlet air flows first through the supply-air heat exchanger (OHX) and then through the compressed-air heat exchanger (THX), and **in that** a bypass line closable by means of a valve (TBPV) is provided, which connects the compressed-air-side inlet of the compressed-air heat exchanger (THX) to its compressed-air-side outlet, and/or **in that** a bypass line closable by means of a valve (OBPV) is provided which connects the compressed-air-side inlet of the supply-air heat exchanger (OHX) to its compressed-air-side outlet.

2. System according to Claim 1, **characterized in that** the compressor (C) is acted upon on the inlet side with air from a pressurized space of an aircraft, preferably with cabin waste air.

3. System according to Claim 1 or 2, **characterized in that** the compressed air fed to the turbine (T) is tapped air from the engines or from an auxiliary assembly of the aircraft.

4. System according to one of the preceding claims, **characterized in that** the compressed-air heat exchanger (THX) forms with the supply-air heat exchanger (OHX) a mechanical unit and is separated from the latter on the compressed-air side.

5. System according to one of Claims 1 to 3, **characterized in that** the supply-air heat exchanger (OHX) and the compressed-air heat exchanger (THX) are separated mechanically and on the compressed-air side.

6. System according to one of the preceding claims, **characterized in that** the compressor is of single-stage or multi-stage design, and/or **in that** one or more compressors are provided.

7. System according to one of the preceding claims, **characterized in that** a line is provided, by means of which the low-pressure-side outlet air of the heat exchanger or heat exchangers (OHX, THX) can be discharged into the surroundings or can be introduced into a ram-air duct of an aircraft air-conditioning system.

8. System according to one of the preceding claims, **characterized in that** a valve (TIV) is provided, by means of which the compressed-air stream fed to the turbine (T) can be varied or can be shut off.

9. System according to one of the preceding claims, **characterized in that** a valve (OSOV) is provided, by means of which the airstream fed to the compressor (C) can be varied or can be shut off.

10. System according to one of the preceding claims, **characterized in that** the compressor (C) and the turbine (T) form a shaft set-up having a common shaft.

11. System according to Claim 10, **characterized in that** the shaft set-up has a drive motor (M) for driving the compressor (C).

12. System according to Claim 10 or 11, **characterized in that** the shaft set-up and the heat exchanger or heat exchangers (OHX; THX) form a common mechanical unit or are separated mechanically.

13. Method for air treatment in an aircraft, in which air is compressed in a compressor (C), the compressed air is cooled on the compressed-air side of a supply-air heat exchanger (OHX) and is then fed to an On Board Inert Gas Generation System (OBIGGS) which is to be supplied with compressed air, the cooling of the air compressed in the compressor (C) taking place by means of air which, by means of a compressed-air supply separate from the air supply of the compressor (C), is fed to a turbine (T), is expanded in the latter and is fed to the low-pressure side of the supply-air heat exchanger (OHX), the turbine power which occurs during the expansion of the compressed air being at least partially utilized for driving the compressor (C), **characterized in that** the compressed air fed to the turbine (T) is cooled, before entering the turbine (T), in a compressed-air heat exchanger (THX), the turbine outlet air being fed first through the supply-air heat exchanger (OHX), for cooling the air compressed in the compressor (C), and subsequently through the compressed-air heat exchanger (THX), for cooling the compressed air fed to the turbine (T), and **in that** an operating mode for ensuring a minimum temperature of the compressed air fed to the system (OBIGGS) or apparatus is provided, in which air compressed in the compressor (C) is routed, at least partially bypassing the supply-air heat exchanger (OHX), from the compressed-air-side inlet side to the compressed-air-side outlet side of the supply-air heat exchanger (OHX) and/or **in that** an operating mode for increasing the turbine inlet temperature is provided, in which the compressed air is routed, at least partially bypassing the compressed-air heat exchanger (THX), from the compressed-air-side inlet side to the compressed-air-side outlet side of the compressed-air heat exchanger (THX).

14. Method according to Claim 13, **characterized in that** cabin waste air is compressed in the compressor (C).

15. Method according to Claim 13 or 14, **characterized in that** cooled or uncooled compressed air from an engine or an auxiliary assembly is fed to the turbine (T).

16. Method according to one of the preceding claims, **characterized in that** the low-pressure-side outlet air of the heat exchanger or heat exchangers is discharged into the surroundings or is introduced into the ram-air duct of an aircraft air-conditioning system.

17. Method according to one of the preceding claims, **characterized in that**, in the case of low pressure of the compressed air fed to the turbine (T), the compressor (C) is additionally motor-driven.

18. Method according to one of the preceding claims, **characterized in that** an operating mode for limiting the turbine inlet pressure is provided, in which the compressed-air stream fed to the turbine (T) is throttled.

## Revendications

1. Système pour le conditionnement d'air dans un avion avec un compresseur(C) alimenté, côté admission d'air, avec un échangeur de chaleur d'air d'alimentation (OHX) disposé en aval du compresseur (C), qui est chargé, côté air comprimé, côté admission, avec de l'air compressé dans le compresseur(C) et qui, côté air comprimé, est en liaison, côté évacuation, avec un système de génération de gaz inerte à bord (OBIGGS), qui doit être alimenté en air comprimé, et avec une turbine (T) qui est chargée, côté admission, en air comprimé d'une alimentation d'air comprimé séparée de l'alimentation en air du compresseur(C) et qui est en liaison, côté évacuation, avec l'entrée côté basse pression de l'échangeur de chaleur d'air d'alimentation (OHX), et qui est relié de telle sorte au compresseur(C) que le compresseur(C) peut être entraîné au moyen de la turbine (T),
**caractérisé**
**en ce qu'**il est disposé en amont de la turbine (T) un échangeur de chaleur d'air comprimé (THX), où l'échangeur de chaleur d'air comprimé (THX) est disposé en aval, côté basse pression, de l'échangeur de chaleur d'air d'alimentation (OHX) de telle sorte que l'air d'évacuation de la turbine traverse d'abord l'échangeur de chaleur d'air d'alimentation (OHX) et ensuite l'échangeur de chaleur d'air comprimé (THX) et
**en ce qu'**il est prévu une conduite de contournement pouvant être fermée par une vanne (TBPV) qui relie l'entrée, côté air comprimé, de l'échangeur de chaleur d'air comprimé (THX) à sa sortie côté air comprimé et/ou en ce qu'il est prévu une conduite de contournement pouvant être fermée au moyen d'une vanne (OBPV) qui relie l'entrée côté air comprimé de l'échangeur de chaleur d'air d'alimentation (OHX) à sa sortie côté air comprimé.

2. Système selon la revendication 1, **caractérisé en ce que** le compresseur(C) est chargé, côté admission d'air d'une enceinte sous pression d'un avion, de préférence avec l'air sortant de la cabine.

3. Système selon la revendication 1 ou 2, **caractérisé en ce que** l'air comprimé acheminé à la turbine (T) est de l'air soutiré des propulseurs ou d'un appareil auxiliaire de l'avion.

4. Système selon l'une des revendications précédentes, **caractérisé en ce que** l'échangeur de chaleur d'air comprimé (THX) forme avec l'échangeur de chaleur d'air d'alimentation (OHX) une unité mécanique et est séparé de celui-ci côté air comprimé.

5. Système selon l'une des revendications 1 à 3,
**caractérisé en ce que** l'échangeur de chaleur d'air d'alimentation (OHX) et l'échangeur de chaleur d'air comprimé (THX) sont séparés mécaniquement et côté air comprimé.

6. Système selon l'une des revendications précédentes, **caractérisé en ce que** le compresseur est réalisé avec un ou plusieurs étages et/ou **en ce qu'**un ou plusieurs condenseurs sont prévus.

7. Système selon l'une des revendications précédentes, **caractérisé en ce qu'**une conduite est prévue au moyen de laquelle l'air d'évacuation côté basse pression du ou des échangeurs de chaleur (OHX; THX) peut être émis à l'environnement ou peut être introduit dans un canal d'air de refoulement d'une installation de climatisation d'avion.

8. Système selon l'une des revendications précédentes, **caractérisé en ce qu'**une vanne (TIV) est prévue au moyen de laquelle le flux d'air comprimé amené à la turbine (T) peut être modifié ou bloqué.

9. Système selon l'une des revendications précédentes, **caractérisé en ce qu'**une vanne (OSOV) est prévue au moyen de laquelle le flux d'air amené au compresseur(C) peut être modifié ou bloqué.

10. Système selon l'une des revendications précédentes, **caractérisé en ce que** le compresseur(C) et la turbine (T) forment une installation d'arbre avec un arbre commun.

11. Système selon la revendication 10, **caractérisé en ce que** l'installation d'arbre présente un moteur d'entraînement (M) pour l'entraînement du compresseur(C).

12. Système selon la revendication 10 ou 11, **caractérisé en ce que** l'installation d'arbre et le ou les échangeurs de chaleur (OHX; THX) forment une unité mécanique commune ou sont séparés mécaniquement.

13. Procédé de conditionnement d'air dans un avion, dans lequel l'air est compressé dans un compresseur(C), l'air comprimé est refroidi au côté d'air comprimé d'un échangeur de chaleur d'air d'alimentation (OHX) et est amené ensuite à un système de génération de gaz inerte à bord (OBIGGS), qui doit être alimenté en air comprimé, où le refroidissement de l'air compressé dans le compresseur(C) a lieu avec de l'air qui est amené au moyen d'une alimentation d'air comprimé séparée de l'alimentation d'air du compresseur(C) à une turbine (T), est détendu dans celle-ci et est amené au côté basse pression de l'échangeur de chaleur d'air d'alimentation (OHX), où la puissance de turbine produite lors de la détente de l'air comprimé est utilisé au moins partiellement pour l'entraînement du compresseur(C),
**caractérisé**
**en ce que** l'air comprimé amené à la turbine (T), avant d'entrer dans la turbine (T), est refroidi dans un échangeur de chaleur d'air comprimé (THX), où l'air sortant de la turbine, pour le refroidissement de l'air comprimé dans le compresseur(C), traverse d'abord l'échangeur de chaleur d'air d'alimentation (OHX) et ensuite, pour le refroidissement de l'air comprimé amené à la turbine (T), l'échangeur de chaleur d'air comprimé (THX) et
**en ce qu'**il est prévu un mode de fonctionnement pour assurer une température minimale de l'air comprimé amené au système (OBIGGS) ou à l'appareil, lors duquel l'air comprimé dans le compresseur(C), en contournant au moins partiellement l'échangeur de chaleur d'air comprimé (OHX), est mené du côté d'admission, côté air comprimé au côté d'évacuation, côté air comprimé de l'échangeur de chaleur d'air d'alimentation (OHX) et/ou en ce qu'un mode de fonctionnement pour augmenter la température d'admission dans la turbine est prévu lors duquel l'air comprimé, en contournant au moins partiellement l'échangeur de chaleur d'air comprimé (THX), est mené du côté d'admission côté air comprimé au côté d'évacuation côté air comprimé de l'échangeur de chaleur d'air comprimé (THX).

14. Procédé selon la revendication 13, **caractérisé en ce que** de l'air sortant de la cabine est compressé dans le compresseur(C).

15. Procédé selon la revendication 13 ou 14, **caractérisé en ce que** de l'air comprimé refroidi ou non refroidi d'un propulseur ou appareil auxiliaire est amené à la turbine (T).

16. Procédé selon l'une des revendications précédentes, **caractérisé en ce que** l'air d'évacuation côté basse pression du ou des échangeurs de chaleur est émis à l'environnement ou est introduit dans le canal d'air de refoulement d'une installation de climatisation d'avion.

17. Procédé selon l'une des revendications précédentes, **caractérisé en ce que** le compresseur(C) est additionnellement entraîné par moteur lors d'une faible pression de l'air comprimé acheminé à la turbine (T).

18. Procédé selon l'une des revendications précédentes, **caractérisé en ce qu'**il est prévu un mode de fonctionnement pour limiter la pression d'admission dans la turbine, dans lequel le flux d'air comprimé amené à la turbine (T) est étranglé.
